# EUROPEAN PATENT APPLICATION

(11) **EP 4 741 911 A2**
(43) Date of publication of application: **13.05.2026**
(21) Application number: 26160012.6
(22) Date of filing: 06.11.2024
(51) Int. Cl.: G02B 27/64

(54) **COMPACT FOLDED TELE CAMERAS WITH SLIM HIGH IMAGE QUALITY OPTICAL IMAGE STABILIZATION ACTUATOR**

(30) Priority: 08.11.2023 US 202363597017 P
(62) Divisional of application: 24813238.3
(71) Applicant: Corephotonics Ltd., 6492103 Tel Aviv (IL)
(72) Inventor: GOLDSTEIN, Kobi, 6492103 Tel Aviv (IL); GOLDENBERG, Ephraim, 6492103 Tel Aviv (IL); WEITZ, Tom, 6492103 Tel Aviv (IL)
(74) Representative: TRBL Intellectual Property

(57) **Abstract**

Folded Tele cameras comprising a lens including a plurality of lens elements divided into a first lens group (G1) and a second lens group (G2) and having an EFL in the range of 8mm<EFL<40mm, an image sensor, an optical path folding element (OPFE) for folding a first optical path (OP1) to a second optical path (OP2), wherein G1 is located at an object side of the OPFE, and wherein G2 is located at an image side of the OPFE, the OPFE having a height H_{O} measured along OP1, and an optical image stabilization (OIS) actuator operational to perform OIS and including a single motor for performing OIS along a first OIS direction by jointly rotating G1 around a G1 rotation axis by a G1 rotational stroke (Rot_{G1}) and by rotating the OPFE around an OPFE rotation axis by an OPFE rotational stroke (Rot_{OPFE}) < Rot_{G1}, wherein the G1 rotation axis and the OPFE rotation axis are parallel to each other and perpendicular to both OP1 and OP2, and wherein a distance d_{ROT} between the G1 rotation axis and the OPFE rotation axis fulfills d_{ROT} < H_{O}/2.

## Description

### CROSS REFERENCE TO RELATED APPLICATIONS

This application claims the benefit of priority from U.S. provisional patent applications No. 63,597,017 filed November 8, 2023, which is incorporated herein by reference in its entirety.

### FIELD

The presently disclosed subject matter is generally related to the field of digital cameras.

### DEFINITIONS

In this application and for optical and other properties mentioned throughout the description and figures, the following symbols and abbreviations are used, all for terms known in the art:
Total track length (TTL): the maximal distance, measured along an axis parallel to the optical axis of a lens, between a point of the front surface S₁ of a first lens element L₁ that faces an object and an image sensor, when the system is focused to an infinity object distance.
Back focal length (BFL): the minimal distance, measured along an axis parallel to the optical axis of a lens, between a point of the rear surface S_{2N} of the last lens element L_{N} and an image sensor, when the system is focused to an infinity object distance.
Effective focal length (EFL): in a lens (assembly of lens elements L₁ to L_{N}), the distance between a rear principal point P' and a rear focal point F' of the lens.
f-number (f/#): the ratio of the EFL to an entrance pupil diameter (or simply aperture diameter "DA"), f/# = EFL/DA.

### BACKGROUND

Multi-aperture cameras (or "multi-cameras", of which a "dual-cameras" having two cameras is an example) are today's standard for portable electronic mobile devices ("mobile devices", e.g. smartphones, tablets, headsets, smartwatches etc.). A multi-camera usually comprises a wide field-of-view (or "angle") FOV_{W} camera ("Wide" camera or "W" camera), and at least one additional camera, e.g. with a narrower (than FOV_{W}) FOV (Telephoto or "Tele" camera with FOV_{T}.

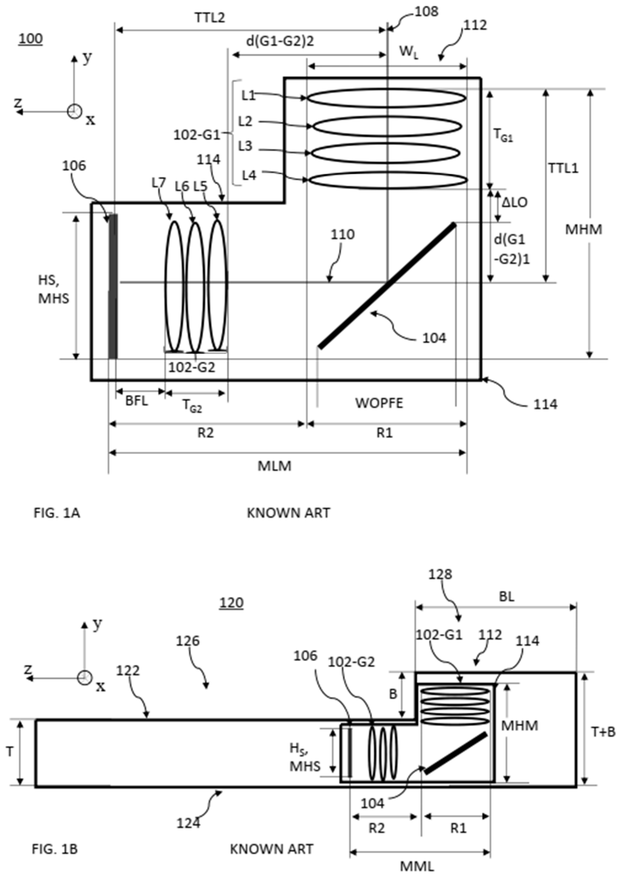

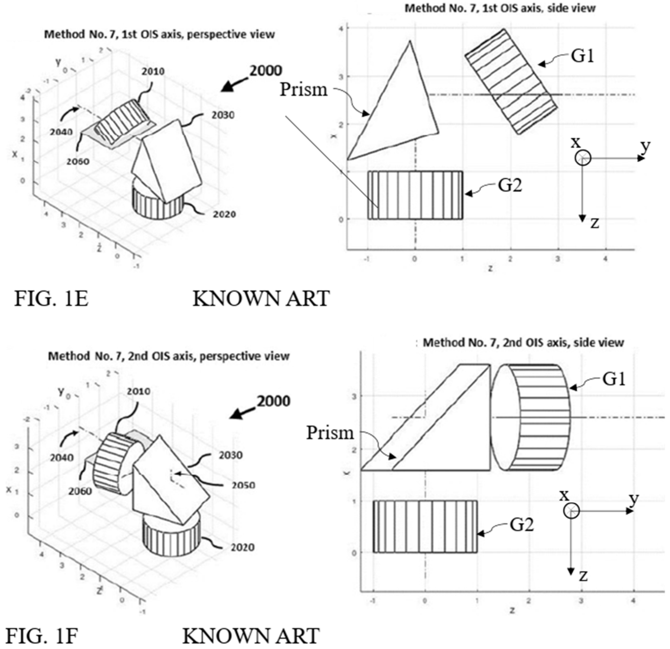

FIG. 1A shows schematically an embodiment of a known folded Tele camera **100.** For simplicity, such a camera may be referred to herein simply as "folded camera", with the understanding that all such folded cameras are "Tele" cameras. Camera **100** comprises a lens **102,** an optical path folding element (OPFE) **104,** e.g. a prism or a mirror, and an image sensor **106** having a sensor height H_{S}. Here and in the following, a height is measured along OP1. OPFE **104** folds a first optical path ("OP1") **108** to a second optical path (OP2) **110.** Lens **102** includes a plurality of N lens elements (here: N=7) numbered L₁ - L₇, which is divided in two lens groups, a first group **102-G1** ("G1") that includes L₁ - L₄ and has a thickness T_{G1}, is located at an object side of the OPFE and has a lens optical axis which is parallel to OP1, and a second lens group **102-G2** ("G2") that includes L₅-L₇ and has a thickness T_{G2}, is located at an image side of the OPFE and has a lens optical axis which is parallel to OP2, i.e. normal to sensor **106.** Lens elements included in any of G1 or G2 respectively do not move relative to each other. Lens **102** has a lens width W_{L} (measured along OP2). Here and in the following, a width is measured along an axis perpendicular to OP1. A distance between **102-G1** and OPFE **104** is marked ΔLO. A width of OPFE **104** is marked W_{OPFE}. A TTL of camera **100** is divided into TTL1 and TTL2. TTL₁ is parallel to OP1 **108,** TTL₂ is parallel to **OP2 110** and TTL=TTL₁+TTL₂. An aperture of camera **100** is numbered **112.**

A theoretical limit for a length of a camera module ("minimum module length" or "MLM"), a first height of a camera module in a "module" region ("minimum module height" or "MHM"), and a second height of a camera module in a "shoulder" region ("minimum shoulder height" or "MHS"), wherein MHM > MHS, including camera **100** is shown. MLM, MHM and MHS are defined by the smallest dimensions of the components included in camera **100.** Hereinafter "HM" denotes "camera module height", or simpler just "module height", and "HS" denotes "camera shoulder height", or simpler just "shoulder height". The camera module includes a housing **114.**

FIG. 1B shows schematically a mobile device **120** (e.g. a smartphone) including known folded camera **100** in a cross-sectional view. Aperture **112** of camera **100** is located at rear surface **122.** A front surface **124** may e.g. include a screen (not shown). Mobile device **120** has a regular region **126** of thickness ("T") and a camera bump region **128** that is elevated by a height B over regular region **126.** Bump region **128** has a bump length ("BL") and a bump thickness T+B. The module region of camera **100** may be integrated into bump region **128,** and the shoulder region may be integrated into regular region **126,** as shown.

For industrial design reasons, a small camera bump (i.e. a short BL) is desired. Camera **100** is integrated in the bump region only partially, what allows a relatively short BL. In general and for slim mobile devices, it is beneficial to minimize MHM and MHS. Especially minimizing MHM is of interest, as it allows minimizing B. For a compact camera, minimizing MLM is also beneficial. Especially minimizing R1 is of interest, as it allows minimizing BL.

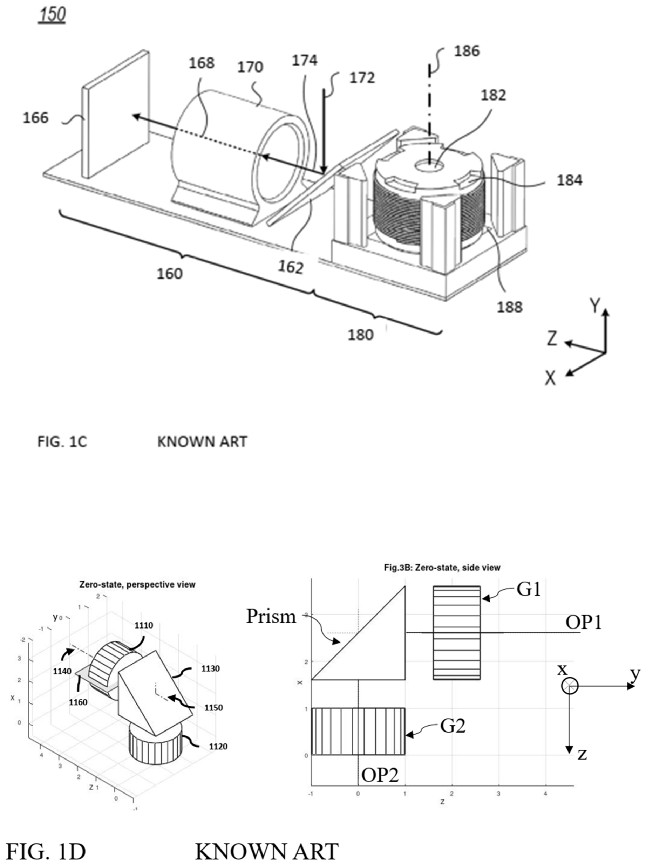

FIG. 1C illustrates a known dual-camera **150** that comprises a folded zoom Tele camera **160** together with a W camera **180.** Folded camera **160** comprises an OPFE **162,** a lens **170** with a plurality of lens elements (not visible) and an image sensor **166.** OPFE folds an optical path from an OP1 **172** to an OP2 **174.** W camera **180** comprises a lens **184** with an optical axis **186** and an image sensor **188.**

An advantage of camera **100** is that a relatively large aperture diameter ("DA") can be achieved, what results in a relatively low f/#. This is because an optical power of lens **102-G1** concentrates the light before it impinges on OPFE **104.** Methods for OIS and focusing of a camera such as camera **100** are for example described in co-owned international patent application PCT/IB2023/060577.

FIGS. 1D-F show a method for performing OIS as disclosed in FIGS. 12A-D in PCT/IB2023/060577, where it is referred to as "method 7". This term will also be used henceforth. Method 7 is beneficial as it achieves a relatively high image quality ("IQ") while performing OIS. FIGS. 1D-F schematically illustrate displacements of different elements of a camera module **2000,** implementing OIS method 7. Camera module **2000** may comprise a first lens group ("G1") **2010,** may comprise a second lens group ("G2") **2020,** and may comprise a prism as an optical path folding element **2030.** The displacements may be visualized by a first reference line **2040,** a second reference line **2050,** and a reference plane 2060.

For performing OIS method 7 in a first direction OIS1, G1 **2010** and OPFE **2030 may** each be rotated around an axis perpendicular to both OP1 and OP2. The axis of rotation of G1 **2010** and the axis of rotation of OPFE **2030** may be distinct (or "different"). In other words, G1 **2010** may be rotated around a first axis, OPFE **2030** may be rotated around a second axis, and the first axis may be different than the second axis. G1 **2010** and OPFE **2030** may be rotated simultaneously, i.e. jointly. G1 **2010** and OPFE **2030** may be rotated by different angles.

In some examples, for performing OIS method 7 in a second direction OIS2 perpendicular to OIS1, G1 **2010** and OPFE **2030** together may be rotated around an axis parallel to OP2. In other examples, OIS in OIS2 may be performed by rotating G1 **2010** and OPFE **2030** together around an axis parallel to OP1.

It would be beneficial to have OIS actuators operational to perform method 7. Examples of such OIS actuators are described hereinbelow.

### SUMMARY

In various examples, there are provided folded Tele cameras, comprising a lens including a plurality of lens elements Lᵢ divided into a first lens group (G1) and a second lens group (G2) and having an EFL in the range of 8mm<EFL<40mm, an image sensor, an OPFE for folding a first optical path (OP1) to a second optical path (OP2), wherein G1 is located at an object side of the OPFE and wherein G2 is located at an image side of the OPFE, the OPFE having a height H_{O} measured along OP1, and an OIS actuator operational to perform OIS and including a single motor, wherein OIS along a first OIS direction is performed using the single motor to jointly rotate G1 around a G1 rotation axis by a G1 rotational stroke (Rot_{G1}) and the OPFE around an OPFE rotation axis by an OPFE rotational stroke (Rot_{OPFE}) < Rot_{G1}, wherein the G1 rotation axis and the OPFE rotation axis are parallel to each other and perpendicular to both OP1 and OP2, and wherein a distance d_{ROT} between the G1 rotation axis and the OPFE rotation axis fulfills d_{ROT} < H_{O}/2.

In some examples, 7.5 < d_{ROT}/H_{O} < 2.5. In some examples, 6 < d_{ROT}/H_{O} < 3.

In some examples, the OIS actuator comprises a lever system that has at least a first lever, a second lever and a lever reference point, the first lever and the second lever define respective positions of the G1 rotation axis and the OPFE rotation axis. In some such examples, the OIS actuator includes two ball-bearings that define the G1 rotation axis, two ball-bearings that define the OPFE rotation axis and one ball-bearing that defines the lever reference point. In other such examples, the OIS actuator includes a flexure that defines the lever reference point, two ball-bearings that define the G1 rotation axis, and two ball-bearings that define the OPFE rotation axis.

In yet other such examples, the OIS actuator includes two G1 levers fixedly coupled to G1, the OIS actuator includes two OPFE levers fixedly coupled to the OPFE.

In some examples, a straight line connecting the OPFE rotation axis and the lever reference point forms an angle α with OP1, a straight line connecting the G1 rotation axis and the lever reference point forms an angle β with OP1, a straight line connecting the G1 rotation axis and the lever reference point forms an angle γ with OP2, and 60deg < α < 120deg, 30deg < β < 90deg and 0deg < γ < 90deg. In some such examples, 80deg < α < 100deg. In other such examples, 85deg < α < 95deg. In some such examples, 50deg < β < 70deg. In other such examples, 55deg < β < 65deg.

In some examples, the first lever is a G1 lever fixedly coupled to G1 and having a length L_{G1}, the second lever is an OPFE lever fixedly coupled to the OPFE and having a length L_{OPFE}, a lever ratio L_{G1}:L_{OPFE} and angles α, β and γ define a rotational stroke ratio Rot_{OPFE}:Rot_{G1}in the range of 1:1.25 to 1:3, and L_{G1}:L_{OPFE} is in the range 0.5:1 to 1:2. In some such examples, L_{G1}:L_{OPFE} is in the range 0.75:1 to 0.95:1. In other such examples, L_{G1}:L_{OPFE} is 0.84:1 to 0.88:1. In some such examples, L_{G1} is in the range of 1mm - 10mm. In other such examples, L_{G1} is in the range of 2mm - 5mm. In yet other such examples, L_{G1} is in the range of 3mm - 4mm. In some such examples, Rot_{OPFE}:Rot_{G1} is in the range of 1:1.4 to 1:8. In other such examples, Rot_{OPFE}:Rot_{G1} is in the range of 1:1.5 to 1:7.

In some examples, the G1 rotation axis, the lever reference point and the OPFE rotation axis lie on a straight line.

In some examples, the first lever is a G1 lever fixedly coupled to G1 and having a length L_{G1}, the second lever is an OPFE lever fixedly coupled to the OPFE and having a length L_{OPFE} < L_{G1}, a lever ratio L_{G1}:L_{OPFE} is equal to a rotational stroke ratio Rot_{OPFE}:Rot_{G1} in the range of 1:1.25 to 1:3, and L_{G1}:L_{OPFE} is in the range 1:1.25 to 1:3. In some such examples, L_{G1}:L_{OPFE} is in the range 1:1.5 to 1:1.8. In other such examples, L_{G1}:L_{OPFE} is 1:1.65. In some such examples, L_{G1} is in the range of 0.5mm - 5mm. In other such examples, L_{G1} is in the range of 1.25mm - 2.5mm. In some such examples Rot_{OPFE}:Rot_{G1} is in the range of 1:1.4 to 1:8. In other such examples Rot_{OPFE}:Rot_{G1} is in the range of 1:1.5 to 1:7.

In some examples, a reflecting surface of the OPFE forms an angle with OP1 which is in the range of 40 degrees to 45 degrees.

In some examples, the folded camera includes an additional OPFE for folding OP2 to a third optical path (OP3) that is parallel to OP1, and the additional OPFE is located at an image side of the lens.

In some examples, the folded camera includes an optical filter, and the optical filter is oriented perpendicular to OP2.

In some examples, the lever reference point is a rolling hinge.

In some examples, the single motor is a voice coil motor including two or more coils and two or more magnets. In some examples, the voice coil motor includes two or more yokes.

In some examples, the folded camera includes three or more preload springs. In some such examples, a first preload spring is located at a first side of the OPFE, and a second and a third preload spring are located at second side of the OPFE.

In some examples, the folded camera has a camera height H_{M} measured along OP1in the range of 5 - 15mm. In some such examples, H_{M} is in the range of 5 - 12.5mm. In some such examples, the folded camera has a first camera module region having a module region height H_{M} and a second camera shoulder region having a camera shoulder region height H_{S} measured along OP1, and H_{S} < H_{M} - 2mm.

In some examples, OIS along a second OIS direction is performed by using the single motor to rotate G1 and the OPFE together around an axis parallel to OP2.

In some examples, focusing is performed by moving G2 linearly along an axis parallel to OP2. In some examples, focusing is performed by moving G1, the OPFE and G2 together along OP2. In some examples, focusing is performed by moving the image sensor parallel to OP2.

In some examples, the OPFE is a prism.

In some examples, the image sensor has a sensor diagonal (SD) in the range 3mm < SD < 17mm.

In various examples, the folded camera is included in a mobile device.In some such examples, the mobile device is a smartphone.

### BRIEF DESCRIPTION OF THE DRAWINGS

Non-limiting examples of embodiments disclosed herein are described below with reference to figures attached hereto that are listed following this paragraph. The drawings and descriptions are meant to illuminate and clarify embodiments disclosed herein, and should not be considered limiting in any way.
FIG. 1A illustrates a known folded Tele camera;
FIG. 1B shows schematically a known mobile device having an exterior surface and including the known folded Tele camera of FIG. 1A;
FIG. 1C shows schematically a known dual camera;
FIG. 1D shows a known method for performing OIS with a folded Tele camera in a center position;
FIG. 1E shows a known method for performing OIS with a folded Tele camera in an OIS position along a first OIS axis;
FIG. 1F shows a known method for performing OIS with a folded Tele camera in another OIS position along a second OIS axis;
FIG. 2A shows schematically an example of a folded Tele camera operational for performing OIS as disclosed herein in a cross-sectional side view;
FIG. 2B shows parts of a folded Tele camera operational for performing OIS as disclosed herein in a side view;
FIG. 2C shows the parts of a folded Tele camera of FIG. 2B in a cross-sectional side view;
FIG. 2D shows the folded Tele camera of FIG. 2B in a cross-sectional perspective view;
FIG. 3A shows parts of another example of a folded Tele camera operational for performing OIS as disclosed herein in a side view and in a center OIS position;
FIG. 3B shows the parts of a folded Tele camera of FIG. 3A in a perspective view;
FIG. 3C shows parts of another folded Tele camera operational for performing OIS as disclosed herein in a side view and in a non-center OIS position;
FIG. 3D shows the parts of a folded Tele camera of FIG. 3C in a perspective view;
FIG. 4A shows schematically parts of an exemplary OIS actuator as disclosed herein in a center position and in a cross-sectional side view.
FIG. 4B shows the parts of the OIS actuator of FIG. 4A in a first OIS position and in a cross-sectional side view.
FIG. 4C shows the parts of the OIS actuator of FIG. 4A in a second OIS position and in a cross-sectional side view;
FIG. 5A shows schematically yet another example of a folded Tele camera disclosed herein in a cross-sectional view;
FIG. 5B shows parts of the folded Tele camera of FIG. 5A in a first side view;
FIG. 5C shows parts of the folded Tele camera of FIG. 5A in a cross-sectional side view;
FIG. 5D shows parts of the folded Tele camera of FIG. 5A in another cross-sectional side view;
FIG. 5E shows parts of the folded Tele camera of FIG. 5A in a cross-sectional perspective view;
FIG. 5F shows parts of the folded Tele camera of FIG. 5A in a second side view opposite to that of FIG. 5B;
FIG. 5G shows another folded Tele camera disclosed herein in a cross-sectional perspective view;
FIG. 6A shows parts of the folded Tele camera of FIG. 5A in a second OIS position with respect to OIS1 and in a side view;
FIG. 6B shows the parts of FIG. 6A in a cross-sectional perspective view;
FIG. 7A shows schematically parts of another exemplary OIS actuator disclosed herein in a cross-sectional side view in a first position;
FIG. 7B schematically shows parts of the OIS actuator of FIG. 7A in the same view in a different position;
FIG. 8A shows parts of another exemplary folded Tele camera disclosed herein in a perspective view;
FIG. 8B shows parts of the camera of FIG. 8A in a back-side view and in a first operation mode, when OIS1 is performed;
FIG. 8C shows parts of the camera of FIG. 8A a back-side view in a second operation mode, when OIS2 is performed;
FIG. 9A shows a ball-bearing (BB) in a first preload example;
FIG. 9B shows another BB in a second preload example;
FIG. 9C shows yet another BB in a third preload example;
FIG. 9D shows yet another BB in a fourth preload example;
FIG. 9E shows yet another BB in a fifth preload example;
FIG. 9F shows yet another BB in a sixth preload example.

### DETAILED DESCRIPTION

In the following detailed description, numerous specific details are set forth in order to provide a thorough understanding. However, it will be understood by those skilled in the art that the presently disclosed subject matter may be practiced without these specific details. In other instances, well-known methods and features have not been described in detail so as not to obscure the presently disclosed subject matter.

In the following, when referring to OIS, we refer solely to OIS according to method 7 disclosed in PCT/IB2023/060577 and discussed above. Notation as introduced above is used. All "heights" are measured along an axis parallel to OP1. To clarify, all embodiments are beneficial for use in a mobile device such as a smartphone. All cameras and actuators etc. disclosed herein are operational to perform OIS according to method 7:
- OIS1: a first lens group ("G1") and an OPFE each are rotated around an axis perpendicular to both OP1 and OP2, whereas G1 is rotated by a larger angle than the OPFE.
- OIS2: The first lens group and the OPFE together are rotated around an axis parallel to OP2.

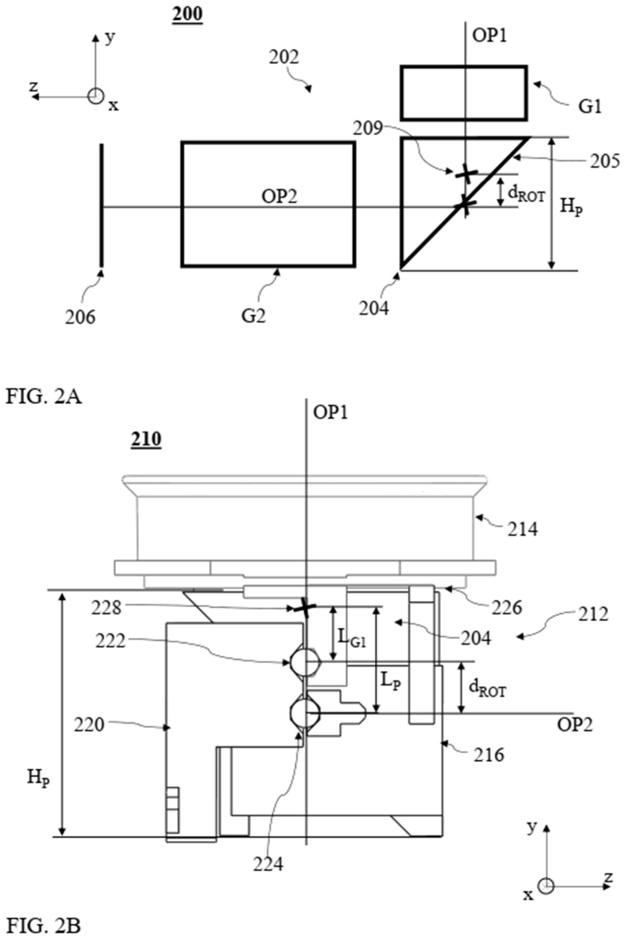

FIG. 2A shows schematically an embodiment of a folded Tele camera disclosed herein and numbered **200** in a cross-sectional view. Camera **200** includes an OIS actuator (FIGS. 2B-D, FIGS. 5B-D, FIGS. 6A-D) disclosed herein. Lens **202** included in camera **200** is divided into a first lens group ("G1") having a first lens optical axis parallel to a first optical path ("OP1") and a second lens group ("G2") having a second lens optical axis parallel to a second optical path ("OP2"). In some examples and as shown in FIG. 2A, a reflecting surface (e.g. **205)** of prism **204** forms an angle of 45 degrees with OP1, such that OP1 and OP2 are perpendicular to each other. In other examples, the reflecting surface of prism **204** may form an angle smaller than 45 degrees with OP1, for example an angle in the range of 40 degrees to 45 degrees, e.g. 44 degrees or 43 degrees. In such examples, OP1 and OP2 form an angle between them which is smaller than 90 degrees.

Camera **200** includes, from an object side to an image side, G1, prism **204,** G2 and an image sensor **206.** Prism **204** is used as OPFE. In the following, "prism" and "OPFE" may be used interchangeably. In other examples, a mirror may be used as OPFE. Image sensor **206** is oriented perpendicular to OP2. To perform OIS along OIS1, prism **204** is rotated along a prism rotation axis (or simply "prism axis") **208** which is parallel to the x-axis and perpendicular to both OP1 and OP2, and G1 is rotated along a G1 rotation axis (or simply "G1 axis") **209** which is parallel to the x-axis, where G1 axis **209** is located at a different position (or "location") than prism axis **208.** Specifically, G1 axis **209** is located closer to an object than prism axis **208.** A distance d_{ROT} between G1 axis **209** and prism axis **208** as well as a height H_{P} of prism **204,** both measured along OP1, are shown.

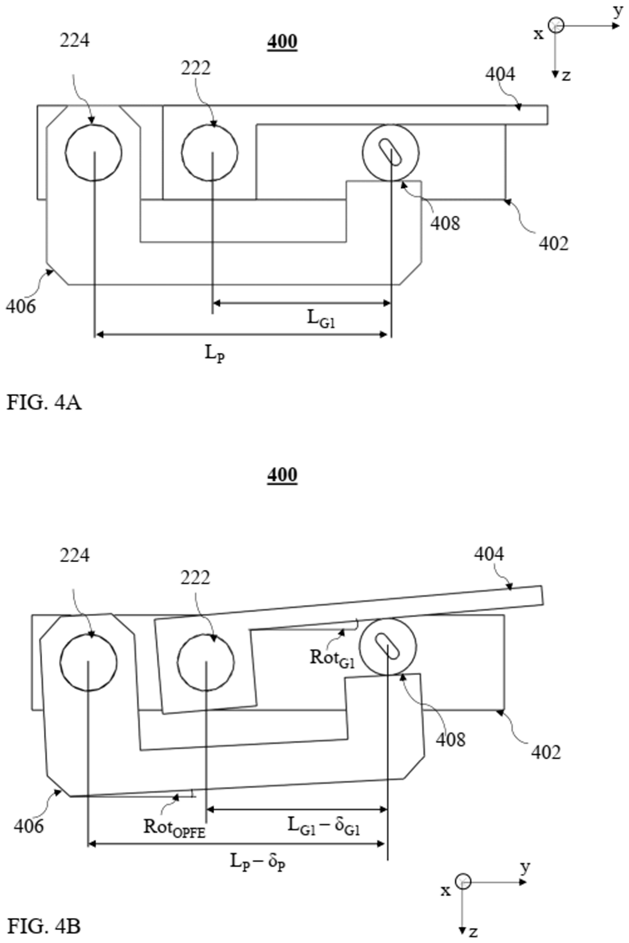

FIG. 2B shows parts of an embodiment of a folded Tele camera disclosed herein and numbered **210** in a side view. Camera **210** includes an OIS actuator **212** disclosed herein. Camera **210** includes all the components of camera **200.** In addition, OIS actuator **212** includes a G1 holder **214** that holds and is fixedly coupled to G1, a prism holder **216** that holds and is fixedly coupled to prism **204** and a stage **220.** OIS actuator **212** includes a G1 lever (e.g. **404** in FIGS. 4A-C) fixedly attached to G1 holder **214** and rotatable around a G1 axis such as G1 axis **209** defined by a G1 ball-bearing ("BB") **222,** a prism lever (e.g. **406** in FIGS. 4A-C) fixedly attached to prism holder **216** and rotatable around a prism axis such as prism axis **208** defined by prism BB **224,** and a flexure **226.** Flexure **226** defines a lever reference point **228.** G1 axis **209** and prism axis **208** are parallel to the x-axis, and their locations (or "positions") are defined by G1 BB **222** and prism BB **224** respectively. A ratio of H_{P} and d_{ROT} is about H_{P}/d_{ROT} ≈ 5.0. In other examples, ratio H_{P}/d_{ROT} may be in the range of 2 < H_{P}/d_{ROT} < 10, or in the range of 2.5 < H_{P}/d_{ROT} < 7.5, or preferably in the range of 3 < H_{P}/d_{ROT} < 6.

When performing OIS1, a distance along the y-axis of G1 BB **222** and prism BB **224** to flexure **226** (i.e. a distance to lever reference point **228)** represents a length of a G1 lever ("L_{G1}") and a prism lever ("L_{OPFE}") respectively, as shown. Note that L_{G1} and L_{OPFE} also appear below and mean the same as here. As the G1 lever and the prism lever are oriented parallel to each other, only lengths L_{G1} and L_{OPFE} define a rotation angle (or "rotational stroke", or simply "angle") of G1 ("Rot_{G1}") and prism **204** ("Rot_{OPFE}") respectively. As shown, L_{G1} < L_{OPFE}, such that Rot_{G1}> Rot_{OPFE}. Specifically, Rot_{G1}/Rot_{OPFE}= L_{OPFE}/L_{G1}. Rot_{G1} > Rot_{OPFE} is beneficial to achieve a relatively high image quality. This is because when rotating an OPFE around prism BB **224** by Rot_{OPFE}, an optical path is rotated by about 2xRot_{OPFE}. However, when rotating a G1 around G1 BB **222** by Rot_{G1}, an optical path is rotated by only about Rot_{G1}. That is, to achieve a similar optical effect with G1 and the OPFE, G1 must be rotated by a Rot_{G1} > Rot_{OPFE}. In some examples, the OPFE is a mirror and a ratio Rot_{G1}/Rot_{OPFE} of about 2 provides a maximum IQ. In other examples, the OPFE is a prism. Rotating the prism causes an optical path to slightly de-center, with the effect that a ratio Rot_{G1}/Rot_{OPFE} of slightly lower than 2 provides a maximum IQ. In such cases, Rot_{G1}/Rot_{OPFE} may be in the range of 1.25 to 2, or in the range of 1.5 to 2, e.g. Rot_{G1}/Rot_{OPFE}=1.9 or Rot_{G1}/Rot_{OPFE}= 1.8 or Rot_{G1}/Rot_{OPFE}= 1.6. In parts of camera **210,** Rot_{G1}/Rot_{OPFE}= 1.92.

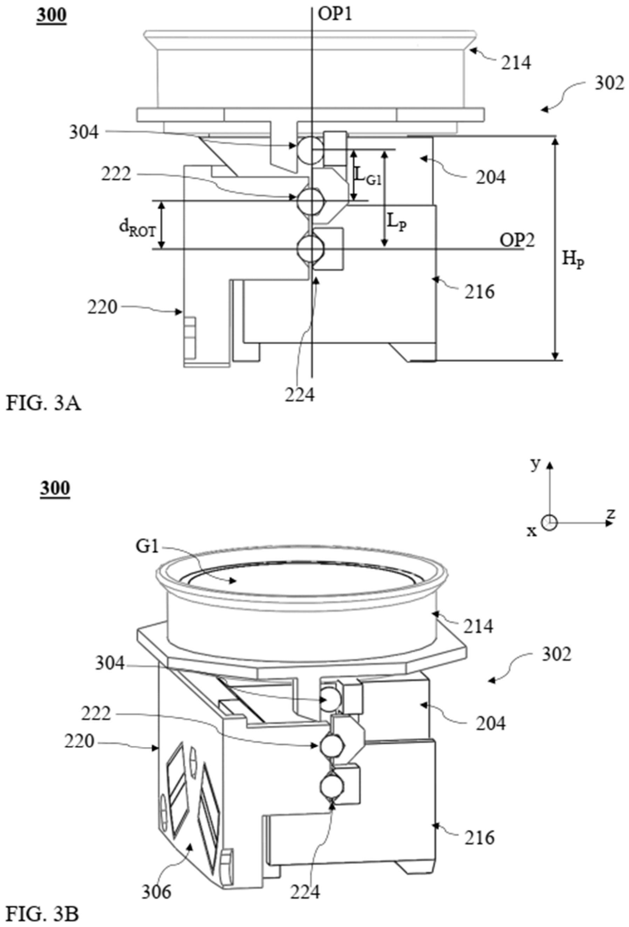

For OIS1, stage **220** does not move. G1 holder **214** is rotated (see also FIGS. 3A-D and 4A-C) with respect to stage **220** by a first angle (not shown), and prism holder **216** is rotated with respect to stage **220** by a second angle (not shown) smaller than the first angle.

In some examples, L_{G1} may be in the range of 0.5mm - 7.5mm. L_{OPFE} may be in the range of 1mm - 10mm. A lever ratio L_{G1}:L_{OPFE} may be in the range 1:1.25 to 1:3. In other words, L_{OPFE} is in the range of 1.25xL_{G1} to 3xL_{G1}. In other examples, L_{G1}:L_{OPFE} may be in the range 1:1.4 to 1:1.8 or 1:1.5 to 1:1.7. We note that G1 BB **222,** prism BB location **224** and lever reference point **228** lie on a straight line that is substantially parallel to OP1.

For OIS2, stage **220** together with G1 holder **214** and prism holder **216** may be rotated along an axis parallel to OP2.

In other examples, a rolling hinge may be used for defining L_{G1} and L_{OPFE} respectively instead of flexure **226** (FIGS. 3A-D).

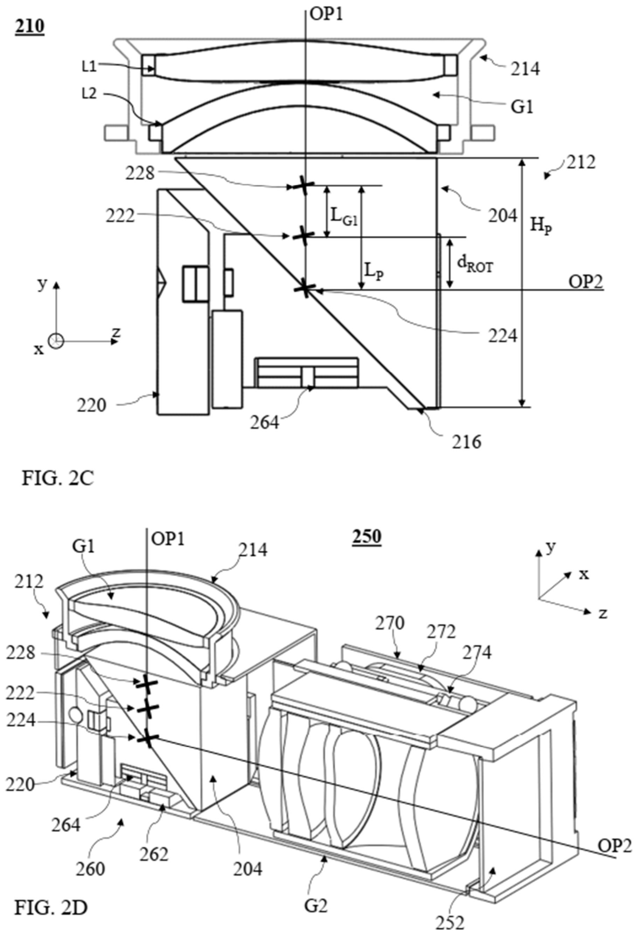

FIG. 2C shows parts of camera **210** in a cross-sectional side view. A first and a second lens element L1 and L2 respectively are shown.

FIG. 2D shows a folded Tele camera disclosed herein and numbered **250** in a cross-sectional perspective view. Camera **250** includes parts of camera **210,** and in addition a second lens group G2, an (optional) optical filter **252,** an image sensor (not shown), an OIS voice coil motor ("VCM") **260** included in OIS actuator **212** as well as a focusing actuator **270.**The image sensor may be positioned at an image side of optical filter **252** and it may be oriented parallel to optical filter **252.** OIS VCM **260** includes a coil **262** and a magnet **264** and is operational to perform OIS1. For performing OIS2, an additional VCM may be used. In other examples, an OIS VCM such as OIS VCM **560** may be operational to perform both OIS1 and OIS2. Focusing VCM **270** includes a coil **272** and a magnet (not shown) and is operational to actuate a linear movement of G2 for focusing along the z-axis by means of focusing ball bearings **274.** Folded Tele camera **250** is included in and surrounded by a housing (not shown). The housing does not move relative to a mobile device including camera **250.** Coil **262** and coil **272** as well as the image sensor are fixedly coupled to the housing. G1, prism **204** and G2 move relative to the housing. In other examples, the image sensor may be moved linearly for focusing along the z-axis and relative to G1, prism **204** and G2.

FIG. 3A shows parts of an embodiment of a folded Tele camera disclosed herein and numbered **300** in a side view. FIG. 3B shows the parts of folded Tele camera **300** in a perspective view. Camera **300** includes an OIS actuator **302** that may include all components of OIS actuator **212,** except that OIS actuator **302** includes a rolling hinge **304** instead of flexure **226.** A location of rolling hinge **304** defines a lever reference point. In FIGS. 3A-B, parts of camera **300** are shown at a center position (or "zero-position"). In the center position, a top surface of G1 holder **214** and a top surface of prism **204** are oriented parallel to a top surface of stage **220.** The term "center position" means a position which, for OIS1, OIS actuator **302** is operational to move G1 and prism **204** symmetrically around it. In general, when no optical stabilization is required, for example when a camera such as folded Tele camera **250** is installed on a tripod, parts of camera **300** are in the center OIS position. This holds for all further embodiments disclosed herein as well.

When performing OIS1, L_{G1} and L_{OPFE} define respectively Rot_{G1} and Rot_{OPFE} for OIS. As shown, L_{G1} < L_{OPFE}, such that Rot_{G1} is larger than Rot_{OPFE}. Specifically, as G1 lever and prism lever are oriented parallel to each other, Rot_{G1}/Rot_{OPFE}= L_{OPFE}/L_{G1}. For OIS1, stage **220** does not move. G1 holder **214** is rotated with respect to stage **220** by Rot_{G1}and prism holder **216** is rotated with respect to stage **220** by Rot_{OPFE} smaller than Rot_{G1}. H_{P} and d_{ROT} are marked. A ratio is H_{P}/d_{ROT} ≈ 4.6.

In parts of camera **300,** Rot_{G1}/Rot_{OPFE}= 1.88. L_{G1} may be in the range of 0.5mm - 5mm. L_{OPFE} may be in the range of 1mm - 10mm. Lever ratio L_{G1}:L_{OPFE} may be in the range 1:1.25 to 1:3. In other examples, L_{G1}:L_{OPFE} may be in the range 1:1.4 to 1:1.8 or 1:1.5 to 1:1.7.

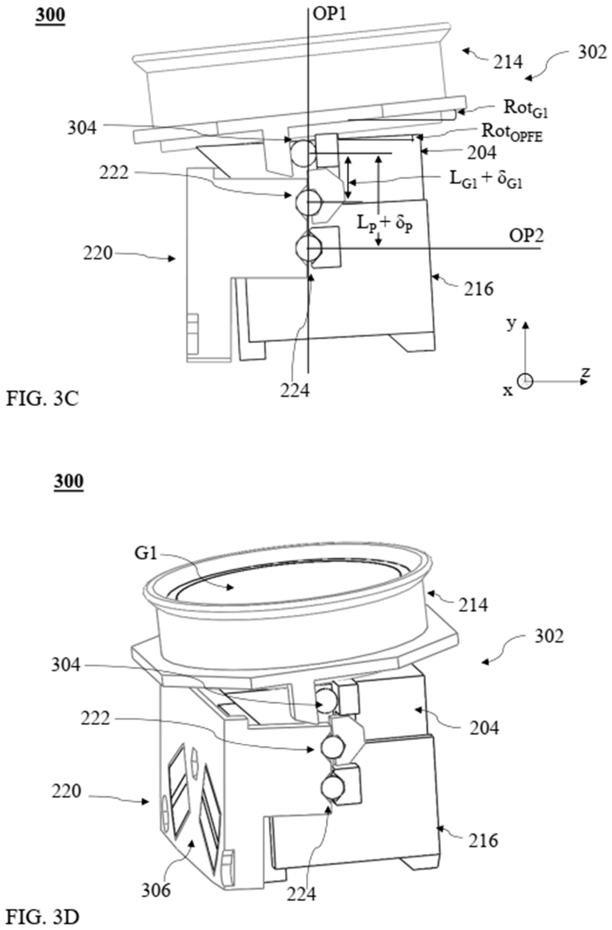

FIG. 3C shows the parts of folded Tele camera **300** in a side view. FIG. 3D shows the parts of folded Tele camera **300** in a perspective view. In FIGS. 3C-D, parts of OIS actuator **300** are shown at a first OIS position different from the center position. In the first OIS position, prism **204** is rotated by Rot_{OPFE} with respect to stage **220,** and G1 holder **214** is rotated by Rot_{G1} > Rot_{OPFE} with respect to stage **220.** As of a movement of rolling hinge **304,** L_{G1} and L_{OPFE} change slightly to L_{G1} + δ_{G1} and L_{OPFE}+ δ_{P} respectively. The respective changes δ_{G1} and δ_{P} may be significantly smaller than L_{G1} and L_{OPFE} respectively, e.g. δ_{G1} = L_{G1}/50 or less and δ_{P} = L_{OPFE}/50 or less. In particular, this means that in many cases, δ_{G1} and δ_{P} are negligible and that lever ratio L_{OPFE}:L_{G1} and Rot_{G1}/Rot_{OPFE} remain approximately constant.

In other examples, camera **250** or parts of camera **300** may be a double-folded camera (including two OPFEs) such as folded Tele camera **500.** In particular, we note that OIS actuator **212** or OIS actuator **302** may be operational for use in a double-folded camera.

FIG. 4A shows schematically parts of an OIS actuator disclosed herein and numbered **400** in a cross-sectional side view. Parts of OIS actuator **400** are shown at a center position. The parts of OIS actuator **400** includes a stage **402,** a G1 lever **404,** a prism lever **406** and a rolling hinge **408.** For OIS1, stage **402** does not move relative to an image sensor. G1 lever **404** and prism lever **406** are rotatable along an axis parallel to the x-axis. In the center position, G1 lever **404** and prism lever **406** are oriented parallel to stage **402** and parallel to the y-axis. Here, lever ratio L_{G1}:L_{OPFE} is about 1:1.65.

FIG. 4B shows schematically parts of an OIS actuator **400** in the same view as FIG. 4A. Parts of OIS actuator **400** are shown at a first OIS position, where prism lever **406** is rotated by a first Rot_{OPFE} and G1 lever **404** is rotated by a first Rot_{G1} > first Rot_{OPFE} with respect to stage **402** respectively. As for a movement of rolling hinge **408,** L_{G1} and L_{OPFE} changes to L_{G1} - δ_{G1} and L_{OPFE}- δ_{P} respectively. The respective change δ_{G1} and δ_{P} may be way smaller than L_{G1} and L_{OPFE} respectively, e.g. δ_{G1} = L_{G1}/50 or less and δ_{P} = L_{OPFE}/50 or less.

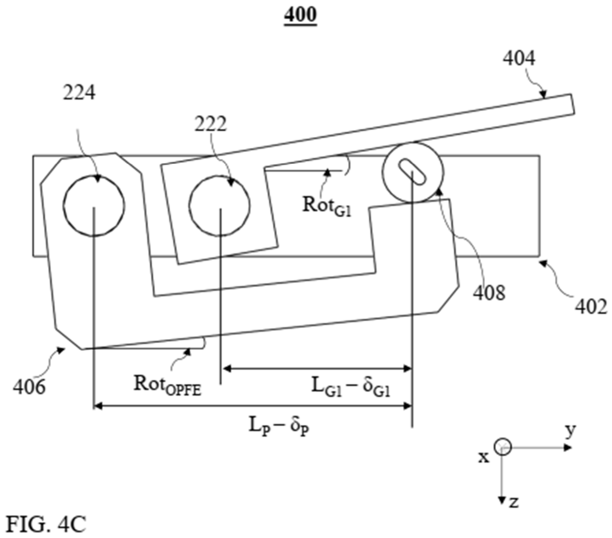

FIG. 4C schematically shows parts of an OIS actuator **400** in the same view as in FIG. 4A. Parts of OIS actuator **400** are shown at a second OIS position. In the second OIS position, prism lever **406** is rotated by a second Rot_{OPFE} > first Rot_{OPFE} and G1 lever **404** is rotated by a second Rot_{G1} > second Rot_{OPFE} with respect to stage **402.** By rotating G1 lever **404** and prism lever **406** respectively, G1 and prism **218** are rotated for performing OIS1. As for a movement of rolling hinge **408,** L_{G1} and L_{OPFE} slightly changes to L_{G1} - δ_{G1} and L_{OPFE}-δ _{P} respectively. The respective change δ_{G1} and δ_{P} may be way smaller than L_{G1} and L_{OPFE} respectively, e.g. δ_{G1} = L_{G1}/50 or less and δ_{P} = L_{OPFE}/50 or less.

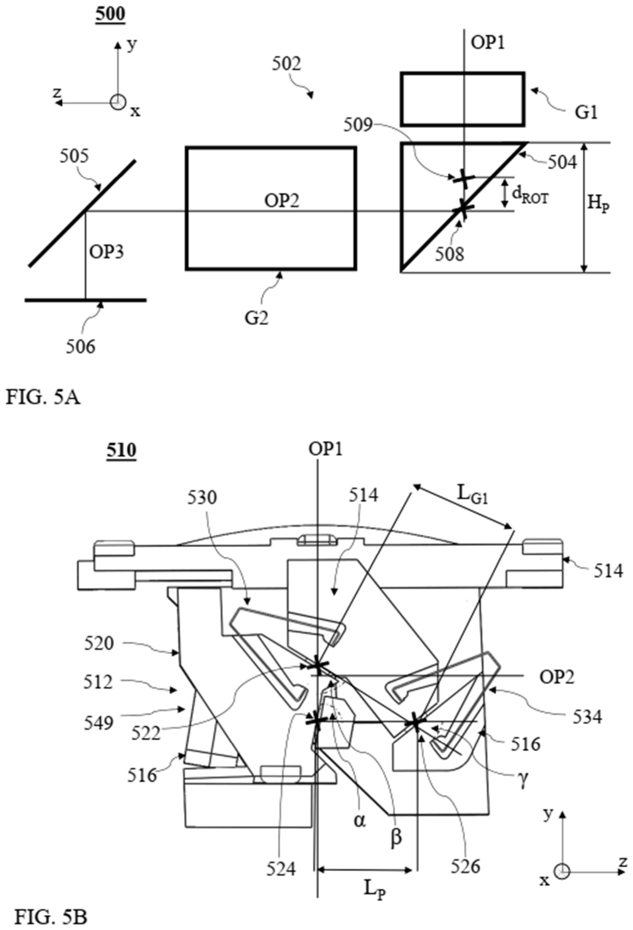

FIG. 5A shows schematically another embodiment of a folded Tele camera disclosed herein and numbered **500** in a cross-sectional view. Camera **500** may include an OIS actuator (FIGS. 2B-D, FIGS. 5B-D, FIGS. 6A-D) disclosed herein. A lens **502** included in camera **500** is divided into two lens groups G1 and G2. Camera **500** includes, from an object side to an image side, G1, a first prism **504,** G2, an image sensor **506** and a second prism **505.** Second prism **505** folds OP2 towards a third optical path ("OP3") which is parallel to OP1. Image sensor **506** is not oriented perpendicular to OP2. For OIS1, prism **504** is rotated along a prism axis **508** and G1 is rotated along a G1 axis **509,** both rotation axes being perpendicular to both OP1 and OP2. A G1 axis **509** is located at a different position than prism axis **508.** Specifically, G1 axis **509** is located closer to an object side than prism axis **508.** A distance d_{ROT} between G1 axis **509** and prism axis **508** as well as a height H_{P} of prism **504** are measured along OP1, are shown. In an example, ratio H_{P}/d_{ROT} ≈ 3.9. In other examples, ratio H_{P}/d_{ROT} may be in the range of 2 to 10, or in the range of 2.5 and 7.5, or preferably in the range of 3 to 6.

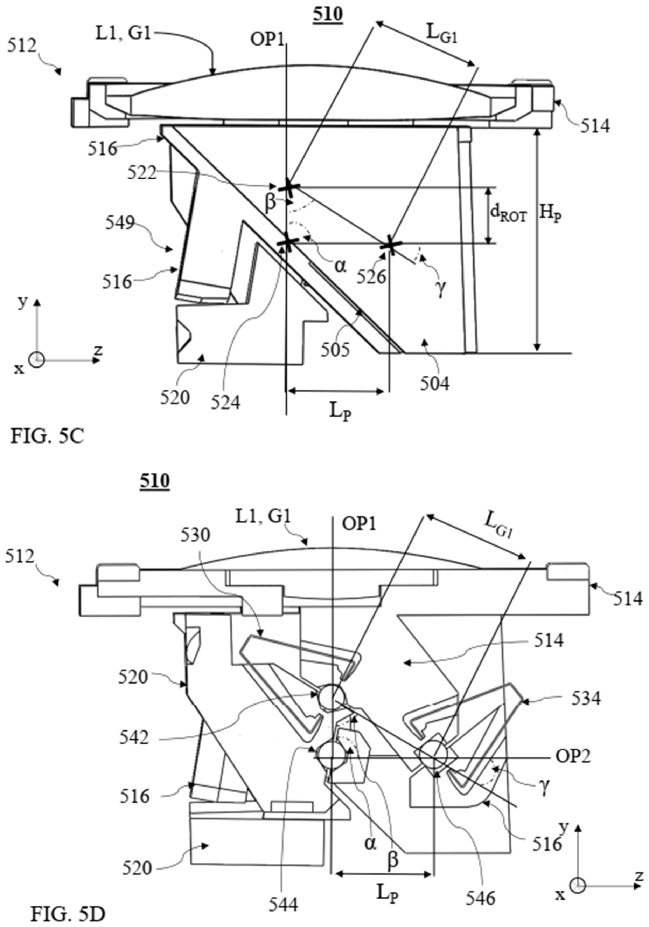

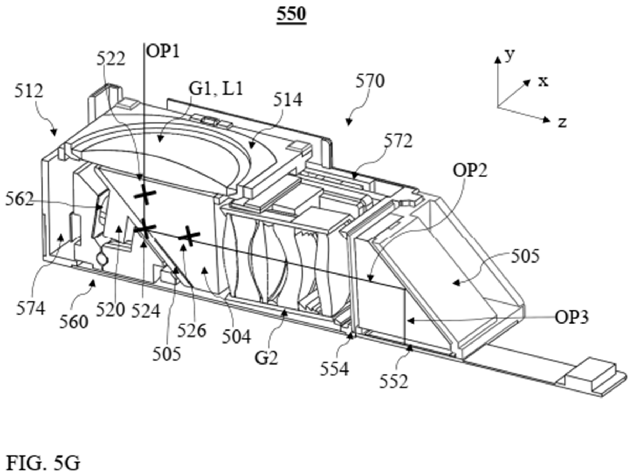

In some examples and as shown in FIG. 5A, a reflecting surface **505** (marked in FIG. 5C, 5G) of first prism **504** forms an angle of 45 degrees with OP1, such that OP1 and OP2 are perpendicular to each other. In other examples, a reflecting surface of first prism **504** may form an angle smaller than 45 degrees with OP1, for example an angle in the range of 40 degrees to 45 degrees, e.g. 44 degrees or 43 degrees. In such examples, OP1 and OP2 form an angle between them which is smaller than 90 degrees. A reflecting surface of second prism **505** may form an angle larger than 45 with OP2, such that OP3 is parallel to OP1.

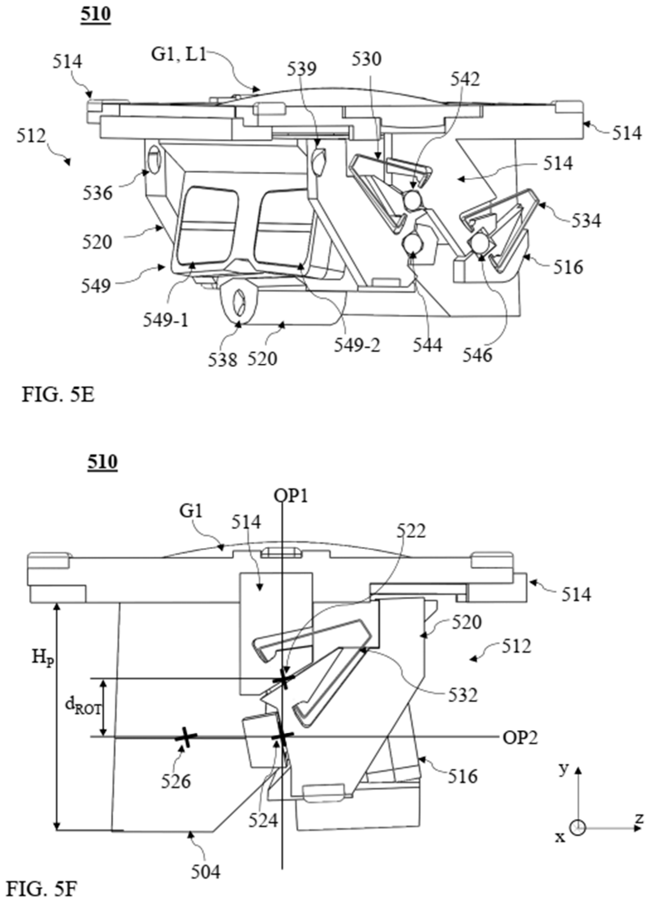

FIGS. 5B-F show parts of another embodiment of a folded Tele camera disclosed herein and numbered **510** in several views. FIG. 5B shows parts of camera **510** in a first side view. FIG. 5C shows parts of camera **510** in a cross-sectional side view. First prism **504** is visible. FIG. 5D shows parts of camera **510** in another cross-sectional side view. FIG. 5E shows parts of camera **510** in a cross-sectional perspective view. FIG. 5F shows parts of camera **510** in a second side view showing an opposite of parts of camera **510** than FIG. 5B.

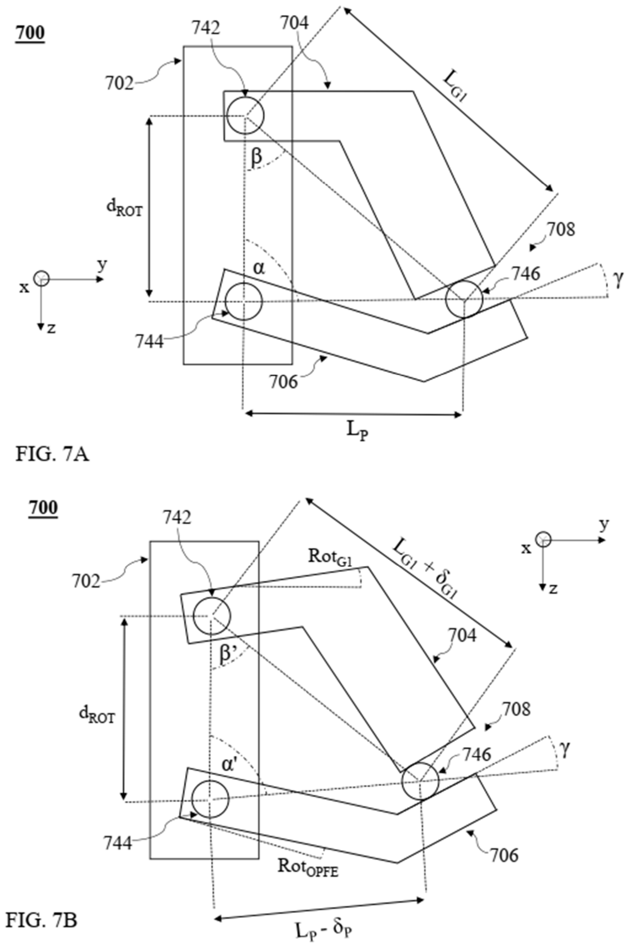

Parts of camera **510** includes an OIS actuator **512** disclosed herein and operational to actuate OIS. Parts of camera **510** includes all components included in camera **500.** In addition, OIS actuator **512** includes a G1 holder **514** including and fixedly coupled to G1, a prism holder **516** including and fixedly coupled to first prism **504** (not visible here, see FIGS. 5C) and a stage **520.** OIS actuator **512** includes a G1 lever (FIGS. 7A-B) fixedly attached to G1 holder **514** and rotatable along a G1 axis defined by a G1 BB **542** (FIGS. 5D-E) at a G1 BB location **522,** a prism lever (FIGS. 7A-B) fixedly attached to prism holder **516** and rotatable along a prism axis defined by a prism BB **544** (FIGS. 5D-E) at a prism BB location **524,** both axes being parallel to the x-axis, and a lever refence point **526** defined by a lever reference BB **546** (FIGS. 5D-E). G1 lever and prism lever are not oriented parallel to each other, so not only lengths L_{G1} and L_{OPFE} define a ratio of Rot_{G1}/ Rot_{OPFE}, but also the angles α, β and γ. In other words, distances and angles between the three BBs **542, 544** and **546** define an OIS1 movement of G1 and first prism **504.** In parts of camera **510,** Rot_{OPFE}:Rot_{G1} is about 1:1.67, i.e. Rot_{G1} = 1.67x Rot_{OPFE}. In other examples, Rot_{OPFE}:Rot_{G1} may be in the range of 1:1.25 to 1:3, i.e. Rot_{G1} is in the range of 1.25xRot_{OPFE} to 3xRot_{OPFE}. In other examples, Rot_{OPFE}:Rot_{G1} may be in the range 1:1.4 to 1:1.8 or 1:1.5 to 1:1.7.

In parts of camera **510,** α = 91.1deg, such that a line connecting between G1 BB location **522** and prism BB location **524** forms an angle of about 1deg with respect to OP1. β = 59.6deg and γ = 37deg. In other embodiments, following values and ranges may be fulfilled: α may be in the range of 25 - 150 degrees, or 60 - 120 degrees, or preferably in the range of 80 - 100 degrees or even in the range of 85 - 95 degrees. β may be in the range of 25 - 120 degrees, or 30 - 90 degrees, or preferably in the range of 50 - 70 degrees or even 55 - 65 degrees. γ may be in the range of 0 - 120 degrees, or 0 - 90 degrees or preferably in the range of 20 - 50 degrees or 30 - 45 degrees. We note that an angle α of about 90 degrees is beneficial for realizing an OIS actuator having a relatively low actuator height.

It is noted that for each of G1 BB **542** and prism BB **544,** an additional respective BB (not shown) is present at G1 BB location **522** and prism BB **544** respectively, but at an opposite side of prism **504** such that two respective rotation axes, a G1 axis and a prism axis, are obtained. Lever reference BB **546** has no such additional respective BB.

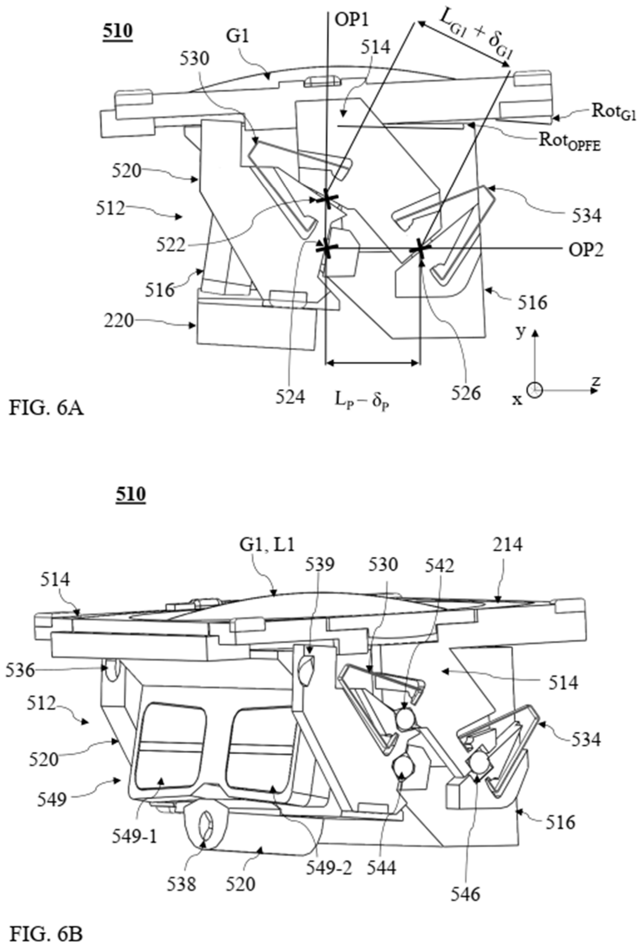

For OIS1, distances and angles of G1 BB location **522** and prism BB location **524** to lever reference point **526** represent respectively a length of a G1 lever ("L_{G1}") and a prism lever ("L_{OPFE}") as shown. L_{G1} and L_{OPFE} define respectively Rot_{G1} for G1 and Rot_{OPFE} for prism **504.** Here, L_{G1} = 3.40mm and L_{OPFE}= 2.93mm, such that lever ratio L_{G1}:L_{OPFE} is about 1:0.86. For OIS1, stage **520** does not move. G1 holder **514** is rotated (see also FIGS. 6A-D, 7A-B and 8A-B) with respect to stage **520** by a first angle (not shown), and prism holder **516** is rotated with respect to stage **520** by a second angle (not shown) smaller than the first angle. In some examples, L_{G1} may be in the range of 0.5mm - 10mm. L_{OPFE} may be in the range of 0.25mm - 7.5mm. L_{G1}:L_{OPFE} may be in the range 1:0.5 to 1:2.5. In other words, L_{OPFE} is in the range of 0.5xL_{G1} to 2.5xL_{G1}. In other examples, L_{G1}:L_{OPFE} may be in the range of 1:0.65 to 1:1 or even 1:0.8 to 1:0.9.

OIS actuator **512** includes three preload springs. The preload springs keep G1 holder **514** and stage **520** together, while allowing for the rotational movements described above. Specifically, a first preload spring **530** and a second preload spring **532** (FIG. 5G) connect stage **520** and G1 holder **514.** A third preload spring **534** allows G1 holder **514** and prism holder **516** to rotate according to the lever ratio. With respect to first preload spring **530,** second preload spring **532** is located at an opposite side of prism **504.**

For OIS2, G1 holder **514,** prism holder **516** and stage **520** together are rotated with respect to an image sensor (FIG. 5G) along a rotation axis parallel to OP2. As shown in FIG. 5E, stage **520** includes three voids (or "cavities"), a first void **536,** a second void **538** and a third void **539.** The three voids are operational to form three BBs that allow OIS movement for OIS2. First void **536** is a pool-like void which allows for a linear movement of a ball included in first void **536.** Second void **538** and third void **539** are pivot-like voids and do not allow for a linear movement of a ball.

In some examples, lever reference point **526** may represent a rolling hinge for defining L_{G1} and L_{OPFE} respectively. In other examples, for OIS2 stage **520** together with G1 holder **514** and prism holder **516** may be rotated along a rotation axis parallel to OP1.

FIG. 5G shows a folded Tele camera disclosed herein and numbered **550** in a cross-sectional perspective view. Camera **550** includes parts of camera **510,** and in addition a second lens group G2, an image sensor **552,** a second prism **505** and an (optional) optical filter **554.** In addition, camera **550** includes an OIS voice coil motor ("VCM") **560** included in OIS actuator **512** as well as a focusing actuator **570.**

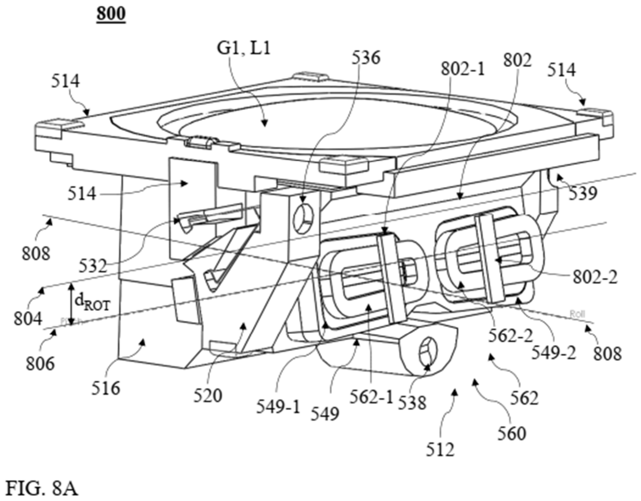

OIS VCM **560** includes a coil assembly **562** including two coils, a first coil **562-1** and a second coil **562-2** (FIG. 8A) and a magnet assembly **549** including two magnets, a first magnet **549-1** and a second magnet **549-2** (FIG. 5E). OIS VCM **560** represents a single motor operational for actuating OIS movement for both OIS1 and OIS2 (FIGS. 8A-B). Such a single motor may be used in all embodiments disclosed herein. We note that a single motor is beneficial in terms of complexity, cost and size of a camera included in a mobile device.

Focusing VCM **570** includes a coil **572** and a magnet (not shown) and is operational to actuate a linear focusing movement of G1, first prism **504** and G2 together along OP2 and relative to second prism **504** and image sensor **552.** The focusing movement may be mediated (or "transmitted") by one or more focusing BBs (not shown). Folded Tele camera **550** is shown when focused to Infinity. Folded Tele camera **550** includes a free volume (or "void") **574** that allows the joint movement of G1, first prism **504** and G2 together for focusing to a finite object distance. Folded Tele camera **550** may be included in and surrounded by a housing (not shown), which does not move relative to a mobile device including camera **550.** Coil assembly **562** and coil **572** as well as second prism **505** and image sensor **552** are fixedly coupled to the housing. G1, first prism **518** and G2 move relative to the housing. In other examples, image sensor **552** may be moved linearly for focusing along the y-axis and relative to G1, first prism **504,** G2 and second prism **505.**

We note that optional optical filter **554** is oriented perpendicular to OP2 to achieve a relatively slim camera **550,** i.e. a camera having a relatively low height. Examples of such positioning of optical filter **554** may be found in co-owned US provisional patent application 63/679182, which is enclosed herein by reference in its entirety.

FIGS. 5A-G show parts of camera **510** in a first OIS position, which is a center position.

FIG. 6A shows parts of camera **510** in a second OIS position with respect to OIS1 and in a side view. FIG. 6B shows parts of camera **510** in the second OIS position and in a cross-sectional perspective view. Second OIS position is a non-center OIS position. In the second OIS position, Rot_{G1} is about 5degrees with respect to the center position, and Rot_{OPFE} is about 3degrees with respect to the center position, according to ratio Rot_{OPFE}:Rot_{G1} which is 1:1.67. The ratio of rotations of G1 and first prism **504** is determined by a lever ratio defined by both lever lengths and angles between them.

FIG. 7A schematically shows parts of another OIS actuator as disclosed herein and numbered **700** in a cross-sectional side view. In FIG. 7A, parts of OIS actuator **700** are shown at a center position. Parts of OIS actuator **700** includes a stage **702,** a G1 lever **704,** a prism lever **706** and a rolling hinge **708.**

For OIS1, stage **702** does not move relative to an image sensor, G1 lever **704** and prism lever **706** are rotatable along distinct axes parallel to the x-axis relative to an image sensor. Parts of OIS actuator **700** also includes a G1 BB **742** defining the G1 axis, a prism BB **744** defining the prism axis and a lever reference BB **746.** Lever reference BB **746,** G1 lever **704** and prism lever **706** form rolling hinge **708.** In the center position, prism lever **706** is oriented perpendicular to stage **702.** A line connecting prism BB **744** and lever reference BB **746** forms an angle of α = 90degrees with the z-axis, a line connecting G1 BB **742** and lever reference BB **746** forms an angle of β ≈ 40 degrees with the z-axis. Angle γ is 25deg. The lengths of G1 lever **704** and prism lever **704** are marked L_{G1} and L_{OPFE} respectively. A distance between the G1 axis and the prism axis is marked d_{ROT}. Here, lever ratio L_{G1}:L_{OPFE} is about 1:1.3.

FIG. 7B schematically shows parts of an OIS actuator **700** in the same view as FIG. 7A. Parts of OIS actuator **700** are shown at a first OIS position, where prism lever **706** is rotated by a first Rot_{OPFE} and G1 lever **704** is rotated by first Rot_{G1} > first Rot_{OPFE} with respect to stage **702.** As of a movement of rolling hinge **708,** L_{G1} and L_{OPFE} changes to L_{G1} + δ_{G1} and L_{OPFE}- δ_{P} respectively. The respective change δ_{G1} and δ_{P} may be way smaller than L_{G1} and L_{OPFE} respectively, e.g. δ_{G1} = L_{G1}/50 or less and δ_{P} = L_{OPFE}/50 or less. In addition, angle α changes to α' = α - Rot_{OPFE} = 90degrees - Rot_{OPFE} and angle β changes to β' = β - Rot_{OPFE} ≈ 40degrees - Rot_{OPFE}.

FIG. 8A shows another parts of camera disclosed herein and numbered **800** in a perspective view. Parts of camera **800** includes parts of camera **510** and in addition a yoke assembly **802** including a first yoke **802-1** and a second yoke **802-2,** which is included in OIS VCM **560.** A G1 axis is marked **804** and a prism axis of first prism **504** is marked **806.** A rotation axis for OIS2 of both G1 and first prism **504** together is marked **808.** OIS actuator **512** and OIS VCM **560** are operational to actuate a rotational movement for both OIS1 (around axes **804** and **806)** and OIS2 (around axis **808).** Magnet assembly **549** is fixedly coupled to prism holder **516,** coil assembly **562** as well as yoke assembly **802** are fixedly coupled to the housing. Yoke assembly **802** is operational for returning OIS VCM **560** to a center position and to prevent a disengagement of the components included in OIS actuator **512.** Magnet assembly **549** covers a relatively large back-side area of prism holder **516.** This is advantageous, as it allows a relatively strong and fast VCM.

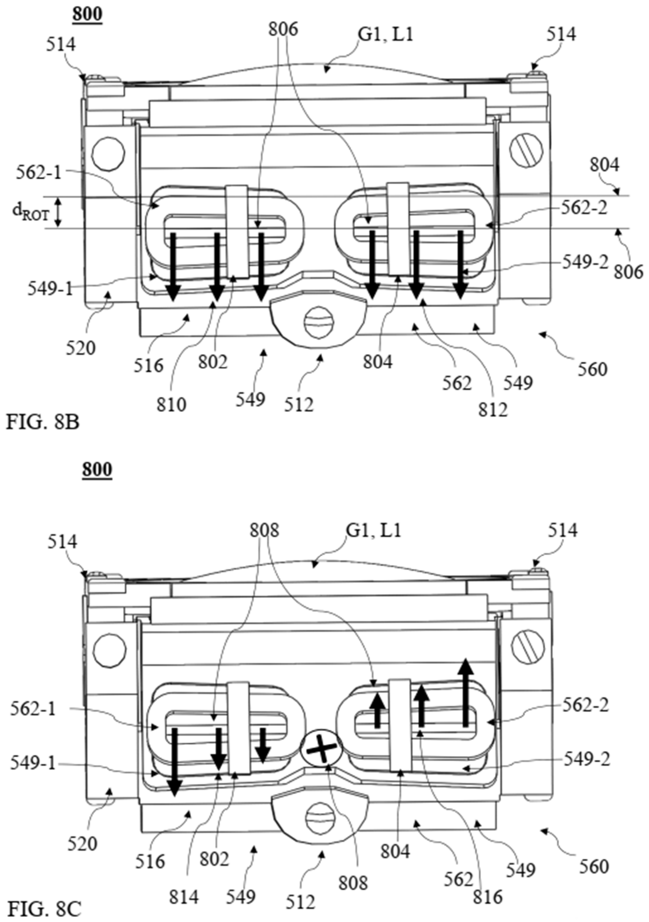

FIG. 8B shows parts of camera **800** in a back-side view and in a first operation mode, when OIS1 is performed. FIG. 8C shows parts of camera **800** in a back-side view in a second operation mode, when OIS2 is performed.

### Actuating OIS1

A current flowing through (or "induced in") first coil **562-1** is directed identical to a current flowing through second coil **562-2.** A first torque induced by first coil **562-1** interacting with first magnet **549-1** and a second torque induced by second coil **562-2** interacting with first magnet **549-2** point in a same direction and as marked by arrows **810** and **812** respectively.

### Actuating OIS2

A current flowing through first coil **562-1** is directed anti-parallel to a current flowing through second coil **562-2.** A first torque induced by first coil **562-1** interacting with first magnet **549-1** and a second torque induced by second coil **562-2** interacting with first magnet **549-2** point in opposite directions and as marked by arrows **814** and **816** respectively.

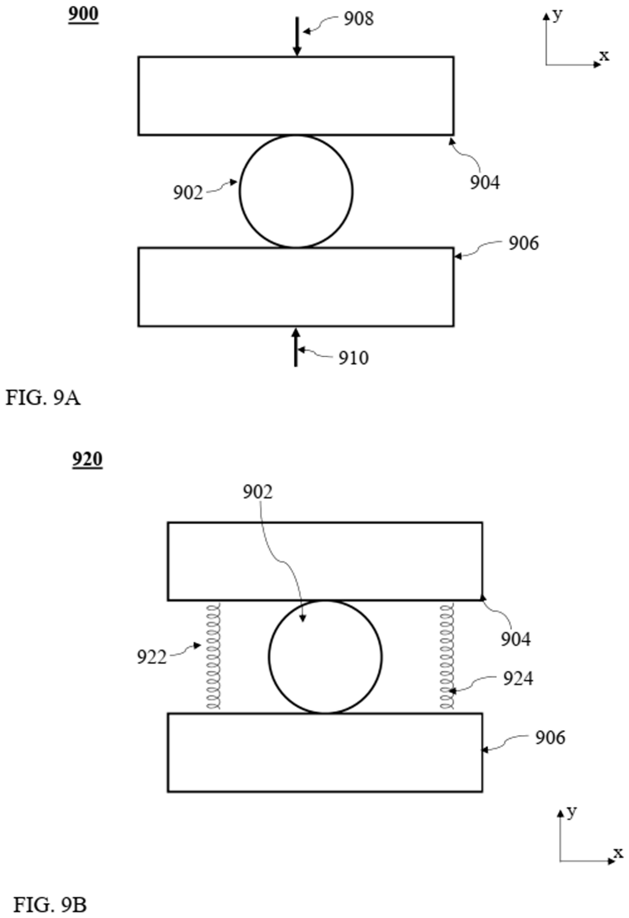

As described above, OIS actuator **512** includes three preload springs that prevent a BB from disengaging. In other examples, other means for providing a preload may be used. FIGS. 9A-F show examples of means for providing a preload. In other examples, camera **550** or parts of camera **510** or parts of camera **800** may be a single-folded camera such as folded Tele camera **200.** In particular, we note that OIS actuator **512** may be operational for use in a single-folded camera.

FIG. 9A shows a ball-bearing (BB) numbered **900** in a first preload example. BB **900** includes a ball **902** that is confined between a top stage **904** and a bottom stage **906.** "Bottom" and "Top" refer here to a position along the y-axis. Two complementary mechanical forces may be applied from top and bottom respectively. A first mechanical force **908** applied to top stage **904** and pushing towards bottom stage **904,** and a second mechanical force **910** applied to bottom stage **906** and pushing towards top stage **904.**

FIG. 9B shows a BB numbered **920** and including a second preload example. BB **920** includes two mechanical springs, a first spring **922** and a second spring **924.** Each of first spring **922** and second spring **924** are fixedly coupled to both top stage **904** and a bottom stage **906,** a spring force of first spring **922** and second spring **924** pushes top stage **904** towards bottom stage **906.**

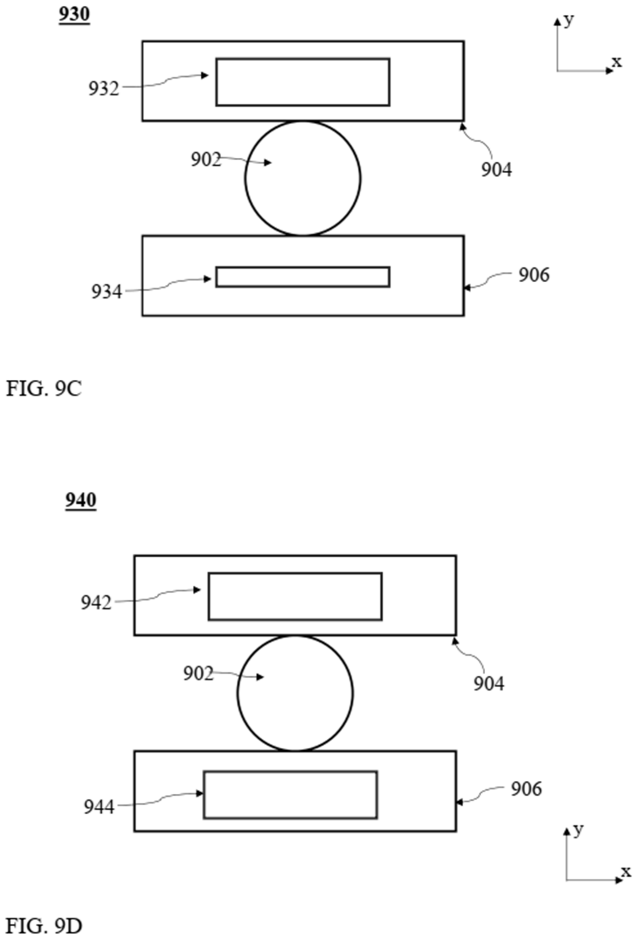

FIG. 9C shows a BB numbered **930** and including a third preload example. BB **930** includes a magnet **932** fixedly coupled to top stage **904** and a yoke **934** fixedly coupled to bottom stage **906.** The attraction of magnet **932** and yoke **934** pushes top stage **904** towards bottom stage **906.**

FIG. 9D shows a BB numbered **940** and including a fourth preload example. BB **940** includes a magnet **942** fixedly coupled to top stage **904** and another magnet yoke **944** fixedly coupled to bottom stage **906.** The attraction of magnet **942** and magnet **944** pushes top stage **904** towards bottom stage **906.**

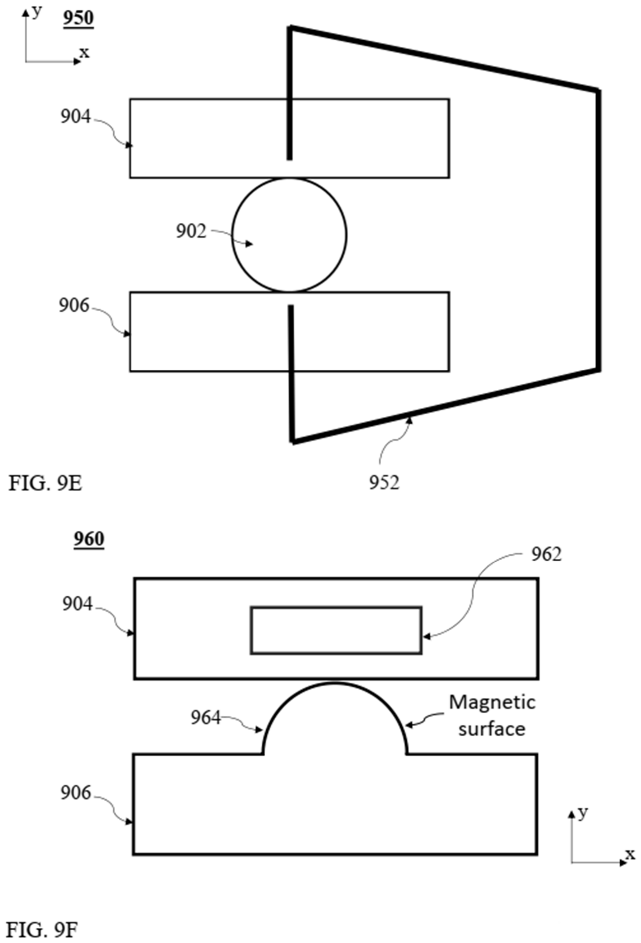

FIG. 9E shows a BB numbered **950** and including a fifth preload example. BB **950** includes a preload spring **952** fixedly coupled to both top stage **904** and bottom stage **906.** A spring force of preload spring **952** pushes top stage **904** towards bottom stage **906.**

FIG. 9F shows a BB numbered **960** and including a sixth preload example. BB **960** includes a top stage **904** and a magnet **962** fixedly coupled to it, a bottom stage **906** that has a semi-circular, magnetic surface **964.**

To clarify, embodiments disclosed herein are beneficial for use in mobile devices such as smartphones.

It is appreciated that certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

Unless otherwise stated, the use of the expression "and/or" between the last two members of a list of options for selection indicates that a selection of one or more of the listed options is appropriate and may be made.

It should be understood that where the claims or specification refer to "a" or "an" element, such reference is not to be construed as there being only one of that element.

All patents and patent applications mentioned in this specification are herein incorporated in their entirety by reference into the specification, to the same extent as if each individual patent or patent application was specifically and individually indicated to be incorporated herein by reference. In addition, citation or identification of any reference in this application shall not be construed as an admission that such reference is available as prior art to the present disclosure.

### Exemplary embodiments of the invention

A first exemplary embodiment defines a folded camera, comprising:
a lens that includes a plurality of lens elements Lᵢ divided into a first lens group (G1) and into a second lens group (G2) and having an effective focal length (EFL) in the range of 8mm<EFL<40mm;
an image sensor;
an optical path folding element (OPFE) for folding a first optical path (OP1) to a second optical path (OP2), wherein G1 is located at an object side of the OPFE and wherein G2 is located at an image side of the OPFE, and wherein the OPFE has a height H_{O} measured along OP1; and
an optical image stabilization (OIS) actuator operational to perform OIS and including a single motor,
wherein the folded camera is a folded Tele camera,
wherein the single motor is operational to perform OIS along a first OIS direction by jointly rotating G1 around a G1 rotation axis by a G1 rotational stroke (Rot_{G1}) and rotating the OPFE around an OPFE rotation axis by an OPFE rotational stroke (Rot_{OPFE}) < Rot_{G1},
wherein the G1 rotation axis and the OPFE rotation axis are parallel to each other and perpendicular to both OP1 and OP2, and
wherein a distance d_{ROT} between the G1 rotation axis and the OPFE rotation axis fulfills d_{ROT} < H_{O}/2.

A second exemplary embodiment defines the folded camera of the first exemplary embodiment, wherein 7.5 < d_{ROT}/H_{O} < 2.5.

A third exemplary embodiment defines the folded camera of the first exemplary embodiment, wherein 6 < d_{ROT}/H_{O} < 3.

A fourth exemplary embodiment defines the folded camera of the first exemplary embodiment, wherein the OIS actuator comprises a lever system that includes at least a first lever, a second lever, and a lever reference point, and wherein the first lever and the second lever define respective positions of the G1 rotation axis and of the OPFE rotation axis.

A fifth exemplary embodiment defines the folded camera of the first exemplary embodiment, wherein a straight line connecting the OPFE rotation axis and the lever reference point forms an angle α with OP1, wherein a straight line connecting the G1 rotation axis and the lever reference point forms an angle β with OP1, wherein a straight line connecting the G1 rotation axis and the lever reference point forms an angle γ with OP2, and wherein 60deg < α < 120deg, 30deg < β < 90deg and 0deg < γ < 90deg.

A sixth exemplary embodiment defines the folded camera of the fifth exemplary embodiment, wherein 80deg < α < 100deg.

A seventh exemplary embodiment defines the folded camera of the fifth exemplary embodiment, wherein 85deg < α < 95deg.

An eighth exemplary embodiment defines the folded camera of the fifth exemplary embodiment, wherein 50deg < β < 70deg.

A ninth exemplary embodiment defines the folded camera of the fifth exemplary embodiment, wherein 55deg < β < 65deg.

A tenth exemplary embodiment defines the folded camera of the fifth exemplary embodiment, wherein the first lever is a G1 lever fixedly coupled to G1 and having a length L_{G1}, wherein the second lever is an OPFE lever fixedly coupled to the OPFE and having a length L_{OPFE}, wherein a lever ratio L_{G1}:L_{OPFE} and angles α, β and γ define a rotational stroke ratio Rot_{OPFE}:Rot_{G1}in the range of 1:1.25 to 1:3, and wherein L_{G1}:L_{OPFE} is in the range 0.5:1 to 1:2.

An 11th exemplary embodiment defines the folded camera of the tenth exemplary embodiment, wherein L_{G1}:L_{OPFE} is in the range 0.75:1 to 0.95:1.

A 12th exemplary embodiment defines the folded camera of the tenth exemplary embodiment, wherein L_{G1}:L_{OPFE} is 0.84:1 to 0.88:1.

A 13th exemplary embodiment defines the folded camera of the tenth exemplary embodiment, wherein L_{G1} is in the range of 1mm - 10mm.

A 14th exemplary embodiment defines the folded camera of the tenth exemplary embodiment, wherein L_{G1} is in the range of 2mm - 5mm.

A 15th exemplary embodiment defines the folded camera of the tenth exemplary embodiment, wherein L_{G1} is in the range of 3mm - 4mm.

A 16th exemplary embodiment defines the folded camera of the tenth exemplary embodiment, wherein Rot_{OPFE}:Rot_{G1} is in the range of 1:1.4 to 1:8.

A 17th exemplary embodiment defines the folded camera of the tenth exemplary embodiment, wherein Rot_{OPFE}:Rot_{G1} is in the range of 1:1.5 to 1:7.

A 18th exemplary embodiment defines the folded camera of the fourth exemplary embodiment, wherein the G1 rotation axis, the lever reference point and the OPFE rotation axis lie on a straight line.

A 19th exemplary embodiment defines the folded camera of the 18th exemplary embodiment, wherein the first lever is a G1 lever fixedly coupled to G1 and having a length L_{G1}, wherein the second lever is an OPFE lever fixedly coupled to the OPFE and having a length L_{OPFE} < L_{G1}, wherein a lever ratio L_{G1}:L_{OPFE} is equal to a rotational stroke ratio Rot_{OPFE}:Rot_{G1} in the range of 1:1.25 to 1:3, and wherein L_{G1}:L_{OPFE} is in the range 1:1.25 to 1:3.

A 20th exemplary embodiment defines the folded camera of the 19th exemplary embodiment, wherein L_{G1}:L_{OPFE} is in the range 1:1.5 to 1:1.8.

A 21st exemplary embodiment defines the folded camera of the 19th exemplary embodiment, wherein L_{G1}:L_{OPFE} is 1:1.65.

A 22nd exemplary embodiment defines the folded camera of the 19th exemplary embodiment, wherein L_{G1} is in the range of 0.5mm - 5mm.

A 23rd exemplary embodiment defines the folded camera of the 19th exemplary embodiment, wherein L_{G1} is in the range of 1.25mm - 2.5mm.

A 24th exemplary embodiment defines the folded camera of the 19th exemplary embodiment, wherein Rot_{OPFE}:Rot_{G1} is in the range of 1:1.4 to 1:8.

A 25th exemplary embodiment defines the folded camera of the 19th exemplary embodiment, wherein Rot_{OPFE}:Rot_{G1} is in the range of 1:1.5 to 1:7.

A 26th exemplary embodiment defines the folded camera of the first exemplary embodiment, wherein a reflecting surface of the OPFE forms an angle with OP1 which is in the range of 40 degrees to 45 degrees.

A 27th exemplary embodiment defines the folded camera of the first exemplary embodiment, wherein the folded camera includes an additional OPFE for folding OP2 to a third optical path (OP3) that is parallel to OP1, and wherein additional OPFE is located at an image side of the lens.

A 28th exemplary embodiment defines the folded camera of the 27th exemplary embodiment, wherein the folded camera includes an optical filter, and wherein the optical filter is oriented perpendicular to OP2.

A 29th exemplary embodiment defines the folded camera of the fourth exemplary embodiment, wherein the lever reference point is a rolling hinge.

A 30th exemplary embodiment defines the folded camera of the fourth exemplary embodiment, wherein the OIS actuator includes two ball-bearings that define the G1 rotation axis, two ball-bearings that define the OPFE rotation axis and one ball-bearing that defines the lever reference point.

A 31st exemplary embodiment defines the folded camera of the fourth exemplary embodiment, wherein the OIS actuator includes a flexure that defines the lever reference point, two ball-bearings that define the G1 rotation axis, and two ball-bearings that define the OPFE rotation axis.

A 32nd exemplary embodiment defines the folded camera of the fourth exemplary embodiment, wherein the OIS actuator includes two G1 levers fixedly coupled to G1, and wherein the OIS actuator includes two OPFE levers fixedly coupled to the OPFE.

A 33rd exemplary embodiment defines the folded camera of the first exemplary embodiment, wherein the single motor is a voice coil motor (VCM) that includes two or more coils and two or more magnets.

A 34th exemplary embodiment defines the folded camera of the 33rd exemplary embodiment, wherein the VCM includes two or more yokes.

A 35th exemplary embodiment defines the folded camera of the first exemplary embodiment, wherein the folded camera includes three or more preload springs.

A 36th exemplary embodiment defines the folded camera of the 35th exemplary embodiment, wherein a first preload spring is located at a first side of the OPFE, and wherein a second preload spring and a third preload spring are located at second side of the OPFE.

A 37th exemplary embodiment defines the folded camera of the first exemplary embodiment, wherein the folded camera has a camera height H_{M} measured along OP1in the range of 5 - 15mm.

A 38th exemplary embodiment defines the folded camera of the 37th exemplary embodiment, wherein H_{M} is in the range of 5 - 12.5mm.

A 39th exemplary embodiment defines the folded camera of the 37th exemplary embodiment, wherein the folded camera has a first camera module region with a module region height H_{M} and a second camera shoulder region with a camera shoulder region height H_{S}, both H_{M} and H_{S} measured along OP1, and wherein H_{S} < H_{M} - 2mm.

A 40th exemplary embodiment defines the folded camera of the first exemplary embodiment, wherein the single motor is operational to rotate G1 and the OPFE together around an axis parallel to OP2 to perform OIS along a second OIS direction.

A 41st exemplary embodiment defines the folded camera of the first exemplary embodiment, wherein G2 is movable linearly along an axis parallel to OP2 for focusing

A 42nd exemplary embodiment defines the folded camera of the first exemplary embodiment, wherein G1, the OPFE and G2 are movable together along OP2 for focusing.

A 43rd exemplary embodiment defines the folded camera of the first exemplary embodiment, wherein the image sensor is movable parallel to OP2 for focusing.

A 44th exemplary embodiment defines the folded camera of the first exemplary embodiment, wherein the OPFE is a prism.

A 45th exemplary embodiment defines the folded camera of the first exemplary embodiment, wherein the image sensor has a sensor diagonal (SD) in the range 3mm < SD < 17mm.

A 46th exemplary embodiment defines the folded camera of any of the preceding exemplary embodiments, wherein the folded camera is included in a mobile device.

A 47th exemplary embodiment defines the folded camera of the preceding exemplary embodiment, wherein the mobile device is a smartphone.

## Claims

1. A folded camera, comprising:
an image sensor;
an optical path folding element (OPFE) for folding a first optical path (OP1) to a second optical path (OP2);
a lens that includes a plurality of lens elements divided into a first lens group (G1) located at an object side of the OPFE and a second lens group (G2) located at an image side of the OPFE; and
an optical image stabilization (OIS) actuator comprising a first lever, a second lever, and a lever reference point defining a G1 rotation axis and an OPFE rotation axis parallel to the G1 rotation axis,
wherein the OIS actuator is operational to perform OIS along a first OIS direction by jointly rotating G1 around the G1 rotation axis by a G1 rotational stroke (RotG1), and by rotating the OPFE around the OPFE rotation axis by an OPFE rotational stroke (RotOPFE) < RotG1.

2. The folded camera of claim 1, wherein the lens has an effective focal length (EFL) in the range of 8mm<EFL<40mm.

3. The folded camera of claim 1, wherein the G1 rotation axis is perpendicular to both OP1 and OP2.

4. The folded camera of claim 1, wherein a straight line connecting the OPFE rotation axis and the lever reference point forms an angle α with OP1, wherein a straight line connecting the G1 rotation axis and the lever reference point forms an angle β with OP1, wherein a straight line connecting the G1 rotation axis and the lever reference point forms an angle γ with OP2, and wherein 60deg < α < 120deg, 30deg < β < 90deg and 0deg < γ < 90deg.

5. The folded camera of claim 4, wherein 80deg < α < 100deg and 50deg < β < 70deg.

6. The folded camera of claim 4, wherein the first lever is a G1 lever fixedly coupled to G1 and having a length LG1 from a G1 ball bearing to the lever reference point, wherein the second lever is an OPFE lever fixedly coupled to the OPFE and having a length LOPFE from an OPFE ball bearing to the lever reference point, wherein a lever ratio LG1:LOPFE and angles α, β and γ define a rotational stroke ratio RotOPFE:RotG1in a range of 1:1.25 to 1:3, and wherein LG1:LOPFE is in a range of 0.5:1 to 1:2.

7. The folded camera of claim 6, wherein 0.75:1 ≤ LG1:LOPFE ≤ 0.95:1 and 1:1.4 ≤ RotOPFE:RotG1 ≤ 1:8.

8. The folded camera of claim 1, wherein the G1 rotation axis, the lever reference point and the OPFE rotation axis lie on a straight line, wherein the first lever is a G1 lever fixedly coupled to G1 and having a length LG1 from a G1 ball bearing to the lever reference point, wherein the second lever is an OPFE lever fixedly coupled to the OPFE and having a length LG1 from an OPFE ball bearing to the lever reference point, LG1< LOPFE, wherein a lever ratio LG1:LOPFE is equal to a rotational stroke ratio RotOPFE:RotG1 in a range of 1:1.25 to 1:3, and wherein LG1:LOPFE is in a range 1:1.25 to 1:3.

9. The folded camera of claim 1, wherein the lever reference point is a rolling hinge.

10. The folded camera of any of the previous claims, wherein the OIS actuator includes two ball-bearings that define the G1 rotation axis, two ball-bearings that define the OPFE rotation axis and one ball-bearing that defines the lever reference point.

11. The folded camera of any of the previous claims, wherein the folded camera has a camera module height HM measured along OP1that fulfills 5mm ≤ HM ≤ 15mm.

12. The folded camera of claim 11, wherein HM ≤ 12.5mm.

13. The folded camera of any of the previous claims, wherein the folded camera has a first camera module region with a camera module height HM and a second camera shoulder region with a camera shoulder region height HS, wherein HM and HS are measured along OP1, and wherein HS < HM - 2mm.

14. The folded camera of any of the previous claims, wherein the folded camera is included in a mobile device.

15. The folded camera of claim 14, wherein the mobile device is a smartphone.
